# EUROPÄISCHE PATENTANMELDUNG

(11) **EP 1 128 044 A2**
(43) Veröffentlichungstag der Anmeldung: **29.08.2001**
(21) Anmeldenummer: 01104174.6
(22) Anmeldetag: 21.02.2001
(51) Int. Cl.: F02D 41/14

(54) **Fahrzeug-Antriebssystem und Verfahren zum Betrieben eines Fahrzeug-Antriebssystems**

(30) Priorität: 23.02.2000 DE 10008287
(71) Anmelder: Continental ISAD Electronic Systems GmbH & Co. oHG, 86899 Landsberg (DE)
(72) Erfinder: Pels, Thomas, 77855 Achern (DE)
(74) Vertreter: Lippich, Wolfgang, Dipl.-Pys., Dr.rer.nat.

(57) **Zusammenfassung**

Die Erfindung betrifft ein Fahrzeug-Antriebssystem mit einem Verbrennungsmotor (1) mit mehreren Zylindern, einer Einrichtung (12) zur Abschaltung eines Teils der Zylinder bei Teillast und einer elektrischen Maschine (4) zur aktiven Dämpfung von Drehungleichförmigkeiten des Verbrennungsmotors (1), wobei der Verbrennungsmotor (1) ohne Drehungleichförmigkeitsdämfung im Zylinderabschaltbetrieb in einem oder mehreren Drehzahlbereichen wesentlich erhöhte Drehungleichförmigkeiten im Vergleich zu anderen Drehzahlbereichen zeigen würde. Die Erfindung ist dadurch gekennzeichnet, daß das Antriebssystem so gesteuert ist, daß bei einem Betrieb mit Zylinderabschaltung in einem Drehzahlbereich mit erhöhten Drehungleichförmigkeiten zunächst die elektrische Maschine (4) als Aktivdämpfer wirkt und nach Ablauf einer Verzögerungszeit, sofern der Verbrennungsmotor (4) dann noch in dem besagten Drehzahlbereich läuft, eine Wiederanschaltung zumindest eines Teils der abgeschalteten Zylinder erfolgt. Die Erfindung ist auch auf ein entsprechendes Verfahren zum Betreiben eines Fahrzeug-Antriebssystems gerichtet.

## Beschreibung

Die Erfindung betrifft ein Fahrzeug-Antriebssystem mit einem Verbrennungsmotor mit mehreren Zylindern, einer Einrichtung zur Abschaltung eines Teils der Zylinder bei Teillast und einer elektrischen Maschine zur aktiven Dämpfung von Drehungleichförmigkeiten des Verbrennungsmotors. Die Erfindung betrifft auch ein entsprechendes Verfahren zum Betreiben eines Fahrzeug-Antriebssystems.

Den Innenwirkungsgrad von Verbrennungsmotoren (insbesondere solchen mit äußeren Gemischbildung und Fremdzündung) fällt bei kleinen effektiven Zylinder-Mitteldrücken stark ab, und zwar besonders bei niedrigen Drehzahlen. Leistungsstarke Motoren arbeiten daher, da ihnen meist wenig Leistung relativ zu ihrer Maximalleistung abgefordert wird, oft nur mit einem relativ schlechten Wirkungsgrad. Zur Wirkungsgraderhöhung ist es bekannt, in solchen Betriebszuständen mit relativ niedrigem Mitteldruck - die in der vorliegenden Anmeldung kurz als "Teillast" bezeichnet werden - einen Teil der Motorzylinder (z.B. drei Zylinder eines Sechszylindermotors) abzuschalten. Denn dies bewirkt eine wesentliche Erhöhung des effektiven Mitteldrucks in den nicht abgeschalteten Zylindern und somit eine deutliche Erhöhung des Wirkungsgrads. Eine solche Zylinderabschaltung kann beispielsweise durch eine Kraftstoff- und ggf. Zündungsabschaltung erzielt werden, die zwecks Verringerung von Gaswechselarbeit durch eine Ventilabschaltung ergänzt sein kann. Möglich ist auch eine mechanische Stillegung der abgeschalteten Zylinder.

Nachteilig ist jedoch, daß es im Zylinderabschaltbetrieb i.a. zu verstärkten Drehungleichförmigkeiten des Verbrennungsmotors kommt. Grundsätzlich beruhen Drehungleichförmigkeiten im wesentlichen auf den durch die hin- und hergehenden Massen erzeugten Massenkräfte und den hauptsächlich durch die Verbrennungsvorgänge erzeugten Gaskräften. Im allgemeinen sind Verbrennungsmotore so konstruiert, daß sich die Massenkräfte und die Gaskräfte der verschiedenen Zylinder zu einem beträchtlichen Grad kompensieren, so daß sich nur deren unkompensierte Reste als Drehungleichförmigkeiten bemerkbar machen. Bei Zylinderabschaltbetrieb fallen die Gaskräfte bei den abgeschalteten Zylindern aber weitgehend weg, so daß nun die Massenkräfte mangels Kompensation stärker hervortreten. Als Folge sind die Drehungleichförmigkeiten im Zylinderabschaltbetrieb größer als bei Betrieb mit allen Zylindern. In diesen stärkeren Drehungleichförmigkeiten dürfte einer der Gründe dafür liegen, daß die Zylinderabschaltung bisher in der Praxis keine größere Verbreitung gefunden hat.

Zur Ausräumung dieses Nachteils sind in der JP 61 066820 und der DE 195 32 164 A1 bereits Fahrzeug-Antriebssysteme der eingangs genannten Art vorgeschlagen worden. Bei diesen ist der Verbrennungsmotor mit einer elektrischen Maschine gekoppelt, welche insbesondere im Zylinderabschaltbetrieb den Drehmomentschwankungen des Verbrennungsmotors entsprechende antreibende und bremsende Momente entgegensetzt, hierdurch die resultierenden Drehmomentschwankungen verringert und somit die Drehungleichförmigkeiten aktiv dämpft.

Aus der oben genannten DE 195 32 164 A1 ist es bekannt, die Drehungleichförmigkeits-Dämpfung in bestimmten Betriebszuständen des Verbrennungsmotors nicht zu aktivieren, z.B. oberhalb einer bestimmten Drehzahl oder während Beschleunigungs- und Verzögerungsvorgängen (Spalte 2, Zeilen 59 bis 65). Aus den Druckschriften EP 0 175 952 B1, EP 0 427 568 B1 und EP 0 604 979 A2 ist es bekannt, ein System zur aktiven Drehungleichförmigkeits-Dämpfung nur unterhalb einer bestimmten Drehzahl bzw. nur im Leerlauf des Verbrennungsmotors zu betreiben.

In der DE 31 08 374 C2 ist vorgeschlagen worden, bei einer Brennkraftmaschine mit abschaltbaren Zylindern mechanische Schwingungen des Verbrennungsmotors zu erfassen und - wenn deren Amplitude einen bestimmten Wert übersteigt - unabhängig vom Belastungszustand wieder in den Zylinderanschaltbetrieb überzugehen. Der Zylinderanschaltbetrieb wird dabei über einen bestimmten Zeitraum gehalten, um ein Pendeln der Zylinderabschalt-Steuerung zu vermeiden.

Der Erfindung liegt die Aufgabe zugrunde, ausgehend von diesen Vorschlägen Antriebssysteme mit Zylinderabschaltung im Hinblick auf Wirkungsgradverbesserung ohne wesentliche Abstriche bei der Laufruhe weiter zu entwikkeln.

Drehungleichförmigkeiten treten i.a. nicht gleichmäßig verteilt über den Drehzahlbereich des Verbrennungsmotors auf, sondern zeigen sich vielmehr nur in einem oder mehreren - oft sehr schmalen - Drehzahlbereichen mit relativ hoher Amplitude; in den übrigen Drehzahlbereichen liegen sie i.a. nur mit relativ geringer Amplitude vor. Hierbei handelt es sich um Resonanzerscheinungen. Sie lassen sich beschreiben durch einen Schwinger (bei einem Peak) oder ein System mehrerer gekoppelter Schwinger (bei mehreren Peaks). Im letzteren Fall liegen die Resonanzpeaks aufgrund der Kopplungen bei Drehzahlen, die gegenüber den Resonanzdrehzahlen, welche die Einzelschwinger ohne die Kopplungen zeigen würden, verschoben sind.

Ausgehend hiervon stellt die Erfindung ein Fahrzeug-Antriebssystem der eingangs genannten Art bereit, welches durch eine Steuerung gekennzeichnet ist, welche bei einem Betrieb mit abgeschalteten Zylindern in einem Drehzahlbereich mit erhöhten Drehungleichförmigkeiten zunächst die elektrische Maschine als Aktivdämpfer betreibt und nach Ablauf einer Verzögerungszeit, sofern der Verbrennungsmotor dann noch in dem besagten Drehzahlbereich läuft, eine Wiederanschaltung der oder eines Teils der abgeschalteten Zylinder veranlaßt.

Angemerkt sei an dieser Stelle, daß in der vorliegenden Anmeldung die Verwendung der Mehrzahlform in Zusammenhang mit Drehzahlbereichen oder Resonanzpeaks nur zwecks sprachlicher Vereinfachung erfolgt. Wenn "Bereiche" oder "Peaks" erwähnt sind, so soll dies auch einen einzelnen Bereich oder Peak umfassen.

Um zur Erfindung zu gelangen, wurde erkannt, daß bei den eingangs genannten bekannten Antriebssystemen ein Teil des durch die Zylinderabschaltung erzielten Wirkungsgradgewinns durch die Aktivdämpfung mit der elektrischen Maschine wieder verloren geht. Die elektrische Maschine wirkt nämlich bei einem über dem Durchschnitt liegenden Verbrennungsmotor-Drehmomentwert generatorisch bremsend und verwendet die dabei gewonnene und zwischengespeicherte Energie, um gleich anschließend bei dann über dem Durchschnittswert liegenden Verbrennungsmotor-Drehmoment als antreibender Motor zu arbeiten. Sie setzt also fortlaufend "Blindenergie" aus elektrischer in mechanische Energieform, und wieder zurück, um. Nur im Idealfall könnte dies ohne jeden Energieeinsatz geschehen. Auch wenn mit modernen elektrischen Maschinen und Kurzzeit-Energiespeichern sehr hohe Wirkungsgrade erzielbar sind, so läßt sich tatsächlich eine gewisse Verlustleistung bei diesem Hin- und Herschaufeln von Energie nicht vermeiden. Diese - in Form von Wärme abgegebene Leistung - muß vom Verbrennungsmotor bereitgestellt werden. Ein Teil der Kraftstoffersparnis wird hierdurch wieder aufgezehrt.

Bei großen Resonanzamplituden kann der durch die Verlustleistung der Aktivdämpfung bedingte Kraftstoffmehrverbrauch sogar größer als die durch die Zylinderabschaltung erzielte Kraftstoffersparnis sein. Die erfindungsgemäße Wiederanschaltung einiger der oder aller abgeschalteten Zylinder verbessert in diesem Fall den Gesamtwirkungsgrad. Sobald die Wiederanschaltung erfolgt ist, kann die Aktivdämpfung vorteilhafterweise beendet werden. Das Abwarten der Verzögerungszeit dient dazu, ein Einschalten der Zylinder zu vermeiden, wenn die Resonanzdrehzahl nur kurz durchlaufen wird. Nur wenn der Verbrennungsmotor quasi-stationär (d. h. mindestens über die Verzögerungszeit) im Resonanzbereich verbleibt, kommt es zur Zylinderanschaltung. Dies vermeidet ein zu oftmaliges Hin- und Herschalten und ein Pendeln der Zylinderabschaltung. Die Verzögerungszeit beträgt vorzugsweise 1 bis 15 Sekunden. Die Zylinder bleiben nach der Wiederausschaltung vorteilhaft solange angeschaltet, wie der Betriebszustand im Bereich der Resonanz bleibt. Erst nach Verlassen des Resonanzbereichs - und ggf. dem Ablauf einer zweiten Verzögerungszeit - werden die Zylinder wieder abgeschaltet, sofern die Teillastbedingungen dann noch vorliegen.

In den abhängigen Patentansprüche sind vorteilhafte Ausgestaltungen angegeben.

Grundsätzlich kann die Wiederanschaltung nach Ablauf der Verzögerungszeit belastungsunabhängig erfolgen, z.B. immer dann wenn die Drehzahl innerhalb vorbestimmter Grenzen liegt. Eine andere Möglichkeit besteht darin, die Abschaltung erfolgen zu lassen, wenn die zu dämpfende Amplitude der Drehungleichförmigkeit einen vorbestimmten konstanten oder drehzahlabhängigen Schwellwert übersteigt. Die zu dämpfende Amplitude kann für den Vergleich mit dem Schwellwert beispielsweise in einem Kennfeld als Funktion der Drehzahl und ggf. der Belastung des Verbrennungsmotors gespeichert sein. Sofern letzteres zutrifft, ist die Wiederanschaltungsbedingung indirekt belastungsabhängig, denn die Größe der Drehungleichförmigkeitsamplitude hängt i.a. leicht von der Belastung ab. Sofern die Steuerung der Aktivdämpfung durch Regelung erfolgt, ist es auch möglich, die tatsächliche Amplitude - und nicht nur die in den Kennfeldern gespeicherte erwartete Amplitude - zu ermitteln, und zwar z.B. aus der für die Aktivdämpfung benötigten elektrischen Leistung. Auch die hierauf beruhende Wiederanschaltbedingung ist indirekt belastungsabhängig. Gemäß Anspruch 2 ist es jedoch vorteilhaft, die Wiederanschaltbedingung derart in Abhängigkeit vom Betriebszustand des Verbrennungsmotors zu wählen, daß sich ein optimaler Gesamtwirkungsgrad ergibt.

Und zwar wird der Kraftstoffmehrverbrauch für eine Zylinderanschaltung aufgrund des kleineren Mitteldrucks bei der gegebenen Drehzahl und Last verglichen mit dem Kraftstoffmehrverbrauch für eine Aktivdämpfung der größeren Drehungleichförmigkeit bei Zylinderabschaltung aufgrund der Verlustleistung, wiederum bei gegebener Drehzahl und Last. Nur wenn der erst genannte kleiner als der zweit genannte ist, erfolgt nach Ablauf der Verzögerungszeit die Zylinderanschaltung. Falls die elektrische Maschine auch nach der Zylinderanschaltung aktivdämpfend arbeiten soll, geht in diesen Vergleich nicht die absolute Verlustleistung im Zylinderabschaltbetrieb, sondern die Differenz der Verlustleistungen im Zylinderabschalt- undanschaltbetrieb ein. Für den Vergleich können z.B. erwartete Werte für den mitteldruckbedingten Kraftstoffmehraufwand bei Anschaltung in Abhängigkeit z.B. von der Motorlast und Drehzahl aus einem Kennfeld sowie der Wert der momentanen mittleren Leistung der elektrischen Maschine herangezogen werden, falls nach einer etwaigen Zylinderanschaltung keine Aktivdämpfung durchgeführt wird. In diesem Fall wird der Vergleich während des Betriebs (online) durchgeführt. Sofern die Steuerung nur auf Erwartungswerten beruhen soll, braucht der Vergleich nicht online durchgeführt zu werden. Es genügt dann vielmehr, ihn nur einmal bei der Konstruktion des Antriebssystems vorzunehmen und die Vergleichsergebnisse in Form einer Information, ob die Zylinderausschaltung erfolgen soll oder nicht, fest in einem Kennfeld, z.B. als Funktion der Drehzahl und Verbrennungsmotorlast abzulegen. Es sind auch Mischformen möglich, bei denen die Kennfelder adaptiv an die tatsächlichen, online ermittelten Verhältnisse angepaßt werden.

Gemäß Anspruch 3 arbeitet die elektrische Maschine außerhalb der Bereiche erhöhter Drehungleichförmigkeiten, aus denen ggf. ein Übergang in den Zylinderanschaltbetrieb erfolgt, nicht oder zumindest nicht überall als Aktivdämpfer. Gemäß Anspruch 4 wird aber auch außerhalb dieser Bereiche eine Aktivdämpfung vorgenommen. Diese beiden Möglichkeiten können auch in kombinierter Form Anwendung finden. Beispielsweise kann in einem Bereich mit kleinen Drehungleichförmigkeiten von der Dämpfung abgesehen werden, bei großen Peaks und daneben bei Peaks mittlerer Höhe - aus denen noch kein Übergang in den Zylinderanschaltbetrieb erfolgt - kann hingegen die Dämpfung aktiviert sein.

Ein Wechsel der Betriebsweise, also die Abschaltung oder Anschaltung von Zylindern, kann zu Momentensprüngen führen. Diese werden vorteilhaft durch die elektrische Maschine gedämpft, indem diese langsam abnehmende bremsende Momente (bei Zylinderzuschaltung) oder antreibende Momente (bei Zylinderabschaltung) aufbringt.

Neben den oben genannten Aktivdämpferfunktionen übernimmt die elektrische Maschine vorteilhaft die Funktion des Starters des Verbrennungsmotors sowie des Generators zur Versorgung von Bordnetzverbrauchern und zur Ladung einer Starterbatterie (Anspruch 5). Hierdurch werden der konventionelle Starter und die konventionelle Lichtmaschine in einer elektrischen Maschine zusammengefaßt. Grundsätzlich ist es möglich, einen derartigen Starter-Generator über einen Riementrieb mit der Kurbelwelle des Verbrennungsmotors zu koppeln, wie bei einer herkömmlichen Lichtmaschine. Eine weitere Möglichkeit besteht darin, den Starter-Generator im Fahrzeugantriebsstrang an das Schaltgetriebe zu koppeln. Bevorzugt ist jedoch eine Ausbildung als Kurbelwellen-Starter-Generator. Hierbei ist die elektrische Maschine koaxial zwischen Verbrennungsmotor und Fahrkupplung angeordnet und direkt mit der Kurbelwelle oder einer Kurbelwellenverlängerung ohne Übersetzungsgetriebe gekoppelt. Bei einer bevorzugten Ausgestaltung läuft die elektrische Maschine permanent mit dem Verbrennungsmotor mit. Das Starten erfolgt dann in Form eines sog. Direktstarts. Bei anderen Ausgestaltungen ist zwischen Verbrennungsmotor und elektrischer Maschine eine Kupplung angeordnet. Der Start kann hier als sog. Impulsstart erfolgen, bei dem der Starter-Generator zwischen den beiden geöffneten Kupplungen auf eine relativ hohe Drehzahl gebracht wird und so kinetische Energie aufbaut. Nach Ablauf der Hochlaufzeit wird die motorseitige Kupplung geschlossen. Das Kupplungsreibmoment beschleunigt dann den Verbrennungsmotor, so daß dieser startet.

Vorteilhaft handelt es sich bei der elektrischen Maschine um eine Mehrphasen-Wechselstrommaschine, insbesondere in Asynchron- oder Synchron-Bauart. Zur Bereitstellung des erforderlichen Mehrphasen-Wechselstroms (insbesondere Drei-Phasen-Wechselstroms) aus den im Fahrzeug üblicherweise vorhandenen Gleichstromquellen dient vorzugsweise ein Wechselrichter (Anspruch 6).

Die Erfindung ist gemäß den Patentansprüchen 7 bis 10 auch auf entsprechende Verfahren zum Betreiben eines Antriebssystems gerichtet. Hinsichtlich der Einzelheiten wird auf die obigen Ausführungen zum erfindungsgemäßen Fahrzeugantriebssystem und dessen Ausgestaltungen Bezug genommen.

Die Erfindung wird nun anhand von Ausführungsbeispielen und der angefügten schematischen Zeichnung näher erläutert. In der Zeichnung zeigen:
- Fig. 1: ein Diagramm der Winkelbeschleunigung eines Verbrennungsmotors als Funktion der Drehzahl ohne Aktivdämpfung sowie in verschiedenen Betriebszuständen;
- Fig. 2: eine Schemadarstellung eines Fahrzeugantriebssystems; und
- Fig. 3: ein Flußdiagramm einer Betriebsweise des Fahrzeugantriebssystems von Fig. 2a.

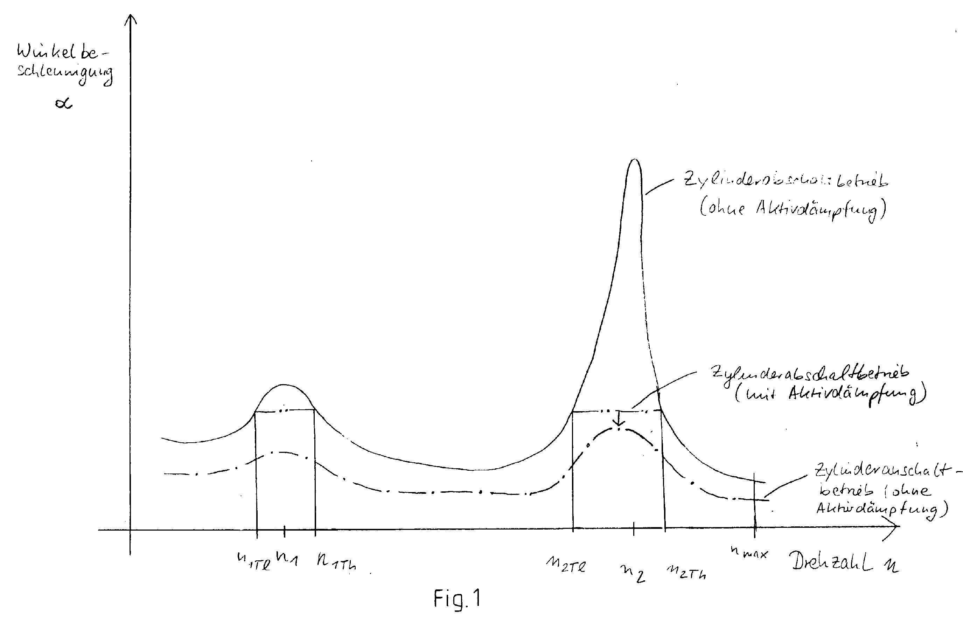

Fig. 1 veranschaulicht die Drehungleichförmigkeits-Verhältnisse durch eine Darstellung der Winkelbeschleunigung w als Funktion der Drehzahl n. Die strichpunktierte Linie zeigt den Zusammenhang für Zylinderanschaltbetrieb. Bei n₁ und n₂ finden sich hier Resonanzpeaks. Bei Zylinderabschaltbetrieb, gezeigt mit durchgezogener Linie liegt das Niveau der Drehungleichförmigkeiten insgesamt höher; darüber hinaus ist der Resonanzpeak bei n₂ wesentlich stärker ausgeprägt. Die Aktivdämpfung im Zylinderschaltbetrieb dämpft die Resonanzamplituden innerhalb von Drehzahlwerten n_{1Tl} und n_{1Th} bzw. n_{2Tl} und n_{2Th}, wie durch strichdoppelpunktierte Linien angedeutet ist. In·dem größeren Peak bei n₂ erfolgt nach Ablauf einer Verzögerungszeit (z.B. 5 Sekunden) eine Wiederanschaltung der Zylinder; die Aktivdämpfung wird dann inaktiviert. Es ergibt sich dann ohne Dämpfung die in Fig. 1 gezeigte, geringere Drehungleichförmigkeit gemäß der Kurve "Zylinderanschaltbetrieb". Dieser Übergang ist in Fig. 1 durch einen Pfeil veranschaulicht. Der im Zylinderanschaltbetrieb aufgrund der ungünstigeren Mitteldruckverhältnisse hervorgerufene Kraftstoff-Mehrverbrauch ist in bei dem vorliegen (nicht dargestellten) Belastungszustand geringer als derjenige, welcher der Verlustleistung der elektrischen Maschine beim Aktivdämpfen des hohen Resonanzpeaks bei n₂ entspricht. Bei dem kleineren Peak bei n₁ würde hingegen die Überführung in den Zylinderanschaltbetrieb keine derartige Verbesserung des Gesamtwirkungsgrads bringen. Das Antriebssystem verbleibt daher hier ohne zeitliche Beschränkung im Zylinderabschaltbetrieb mit Aktivdämpfung. Die Drehzahlwerte, zwischen denen eine Dämpfung erfolgt (nämlich n_{1Tl} und n_{1Th} bzw. n_{2Tl} und n_{2Th}) sowie die Drehzahlwerte, zwischen denen zusätzlich nach Ablauf der Verzögerungszeit die Wiederanschaltung der Zylinder erfolgt (nämlich n_{2Tl} und n_{2Th}) sind für verschiedene Belastungszustände in Form eines Kennfelds fest in einem Steuergerät gespeichert.

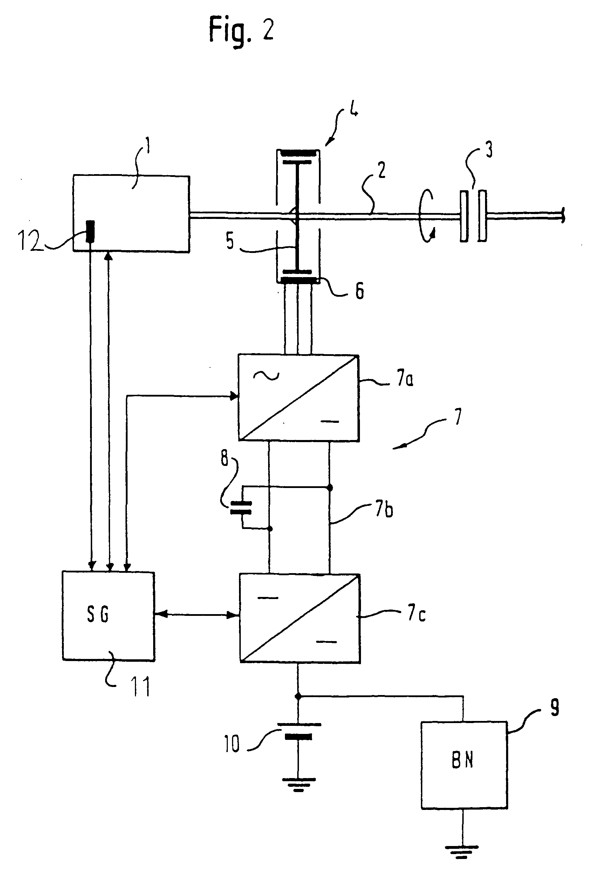

Ein Kraftfahrzeug-Antriebssystem zur Erzielung der anhand Fig. 1 beschriebenen Betriebsweise weist gemäß Fig. 2 einen Verbrennungsmotor 1 auf, der Drehmoment über eine Antriebswelle 2 (z.B. die Kurbelwelle), eine Kupplung 3 und weitere (nicht gezeigte) Teile eines Antriebsstrangs auf die Antriebsräder des Fahrzeugs abgibt. Auf der Antriebswelle 2 sitzt eine als aktive Drehungleichförmigkeitsdämpfer, Starter und Generator dienende elektrische Maschine 4, hier eine Asynchron-Drehstrommaschine. Sie weist einen direkt auf der Antriebswelle 2 sitzenden und drehfest mit ihr verbundenen Läufer 5 sowie einen z.B. am Gehäuse des Verbrennungsmotors 1 abgestützten Ständer 6 auf. Die elektrische Maschine 4 und der Verbrennungsmotor 1 laufen permanent zusammen; das Starten des Verbrennungsmotors 1 erfolgt direkt ohne Übersetzung. Bei anderen (nicht gezeigten) Ausführungsformen ist zwischen Verbrennungsmotor 1 und elektrischer Maschine 4 eine weitere Kupplung angeordnet, welche einen "Impulsstart" erlaubt. Die (nicht dargestellte) Wicklung des Ständers 6 wird durch einen Wechselrichter 7 mit elektrischen Strömen und Spannungen praktisch frei einstellbarer Amplitude, Phase und Frequenz gespeist. Es handelt sich z.B. um einen Gleichspannungs-Zwischenkreis-Wechselrichter, welcher aus einer im wesentlichen konstanten Zwischenkreis-Gleichspannung mit Hilfe von elektronischen Schaltern z.B. sinusbewertete breitenmodulierte Pulse herausschneidet, die - gemittelt durch die Induktivität der elektrischen Maschine 4 - zu nahezu sinusförmigen Strömen der gewünschten Frequenz, Amplitude und Phase führen. Der Wechselrichter ist im wesentlichen aus einem maschinenseitigen Gleichspannungs-Wechselspannungsumrichter 7a, einem Zwischenkreis 7b und einem bordnetzseitigen Gleichspannungswandler 7c aufgebaut. Ein Kurzzeitenergiespeicher 8, z.B. ein Kondensatorspeicher, liegt - elektrisch gesehen - in Zwischenkreis 7b. Der Wandler 7c ist mit einem Fahrzeugbordnetz 9 und einem Langzeitenergiespeicher, hier einer Bordnetzbatterie 10 gekoppelt. Das Bordnetz 9 und die Batterie 10 liegen auf einem niedrigen Spannungsniveau, z.B. 14 Volt. Der Zwischenkreis 7b liegt dem gegenüber auf einer erhöhten Spannung, beispielsweise 42 Volt. Die elektrische Maschine 4 kann nach dem Startvorgang, bei dem sie elektrische Energie benötigt, als Generator fungieren, d.h. elektrische Energie liefern. Der Wandler 7c ist daher als bidirektionaler Wandler ausgebildet, um einerseits für den Startvorgang bzw. dessen Vorbereitung elektrische Energie aus der Bordnetzbatterie 10 in den Zwischenkreis 7b bringen zu können, und um andererseits beim Generatorbetrieb Energie aus dem Zwischenkreis 7b auf die Niederspannungsseite zu überführen, um Verbraucher des Bordnetzes 9 zu speisen und die Bordnetzbatterie 10 zu laden. Bei anderen (nicht gezeigten) Ausführungsformen liegen das Bordnetz 9 und die Bordnetzbatterie 10 ebenfalls auf dem höheren Spannungsniveau; der Wandler 7c kann dann entfallen. Der Umrichter 7a wandelt im Motorbetrieb die Gleichspannung des Zwischenkreises 7b in Wechselspannung um, im Generatorbetrieb speist er die von der elektrischen Maschine 4 gelieferte Energie nach Gleichrichtung in den Zwischenkreis 7b ein. Der Kondensatorspeicher 8 ist in der Lage, Spannungspulse für eine hohe Pulsfrequenz (vorteilhaft im Bereich von 20 - 100 kHz) mit der erforderlichen Flankensteilheit zu liefern. Er dient ferner als Energiespeicher für die beim Dämpfen von Drehmomentschwankungen kurzzeitig anfallende und wieder abzugebende Energie. Ein Steuergerät 11 ist einerseits für die Steuerung des Wechselrichters 7 und somit der elektrischen Maschine 4 und andererseits für die Steuerung des Verbrennungsmotors 1 zuständig, und zwar neben der Steuerung von Zündzeitpunkt, Einspritzung, Ventilbetätigung, etc. insbesondere für die Umschaltung zwischen Zylinderanschaltbetrieb und Zylinderabschaltbetrieb durch Kraftstoff- und Zündungsabschaltung. Bei anderen (nicht gezeigten) Ausführungsformen übernehmen zwei gesonderte Steuergeräte diese Funktionen. Ein Winkelstellungsensor 12 übergibt dem Steuergerät 11 Information über die genaue Winkelstellung der Antriebswelle 2. Aus der Winkelstellungsinformation errechnet dieses auch die momentane Drehzahl des Verbrennungsmotors 1. Das Steuergerät 11 ist mit weiteren (nicht gezeigten) Sensoren verbunden, die u.a. Information über die Fahrpedal- oder Drosselklappenstellung, den Saugdruck, den eingelegten Gang bzw. die vorliegende Fahrstufe, die Temperatur des Verbrennungsmotors, die Außentemperatur etc. liefern. Aus diesen Informationen ermittelt das Steuergerät 11 insbesondere, ob diejenigen Teillastbedingungen vorliegen, welche zur Wirkungsgraderhöhung eine Umschaltung vom Zylindereinschaltbetrieb in den Abschaltbetrieb erfordern. Entsprechendes gilt für die Wiederanschaltung der Zylinder. Es ermittelt ferner anhand der momentanen Drehzahl- und Lastbedingungen und anhand von Kennfeldwerten und ggf. der momentanten Leistung der elektrischen Maschine 4, ob eine Wiederanschaltung der Zylinder zu einem verbesserten Gesamtwirkungsgrad führt, und veranlaßt ggf. diese Wiederanschaltung nach Ablauf der Verzögerungszeit.

Bei Aktivdämpfungsfunktion arbeitet die elektrische Maschine 4 im schnellen Wechsel zwischen Generator- und Motorbetrieb. Wenn das momentane Drehmoment des Verbrennungsmotors 1 den zeitlichen Mittelwert überschreitet, wirkt sie generatorisch bremsend, wenn es diesen jedoch unterschreitet, motorisch antreibend. Handelt es sich bei dem Verbrennungsmotor 1 beispielsweise um einen Vierzylinder-Viertaktmotor, der in der zweiten Ordnung eine relativ große Drehmomentungleichförmigkeit hat, und dreht dieser Motor beispielsweise mit 3000 min⁻¹, so tritt eine Drehungleichförmigkeit bei einer Frequenz von 100 Hz auf. Zum Dämpfen dieser Drehmomentungleichförmigkeiten wechselt die elektrische Maschine 4 also 100 mal pro Sekunde zwischen Generator und Motorbetrieb. In jedem Zyklus wird die jeweils generatorisch erzeugte Energie im Kurzzeitspeicher 8 zwischengespeichert, um gleich anschließend wieder für den motorischen Betrieb an die elektrische Maschine 4 abgegeben zu werden. Die Verluste der elektrischen Maschine 4 werden dadurch gedeckt, daß die pro Zyklus geleistete Antriebsarbeit etwas geringer als die Generatorarbeit gewählt wird, somit die Maschine 4 im zeitlichen Mittel leicht generatorisch bremsend arbeitet. Die Verlustleistung wird also vom Verbrennungsmotor 1 aufgebracht. Während des Aktivdämpferbetriebs braucht also kein Strom über den Wandler 7c zu laufen. Die Information darüber, wann die elektrische Maschine 4 zwecks Dämpfung der Drehmomentungleichförmigkeiten generatorisch und wann sie motorisch arbeiten soll (und welche Drehmomentbeträge sie hierbei jeweils aufbringen soll), entnimmt das Steuergerät 11 einem Kennfeld, in dem die erwarteten Drehmomentungleichförmigkeiten als Funktion der Drehzahl und ggf. (wie Motorlast, Temperatur abgelegt sind). Möglich sind auch adaptive Kennfeldsteuerungen oder Regelungen, welche beispielsweise auf einer Messung der Drehungleichförmigkeiten in kurz vorausgegangenen Arbeitstakten beruhen. Falls die elektrische Maschine 4 während des Aktivdämpfens Strom für Verbraucher liefern soll, wird dem beschriebenen Wechselmoment ein konstantes generatorisches Bremsmoment überlagert.

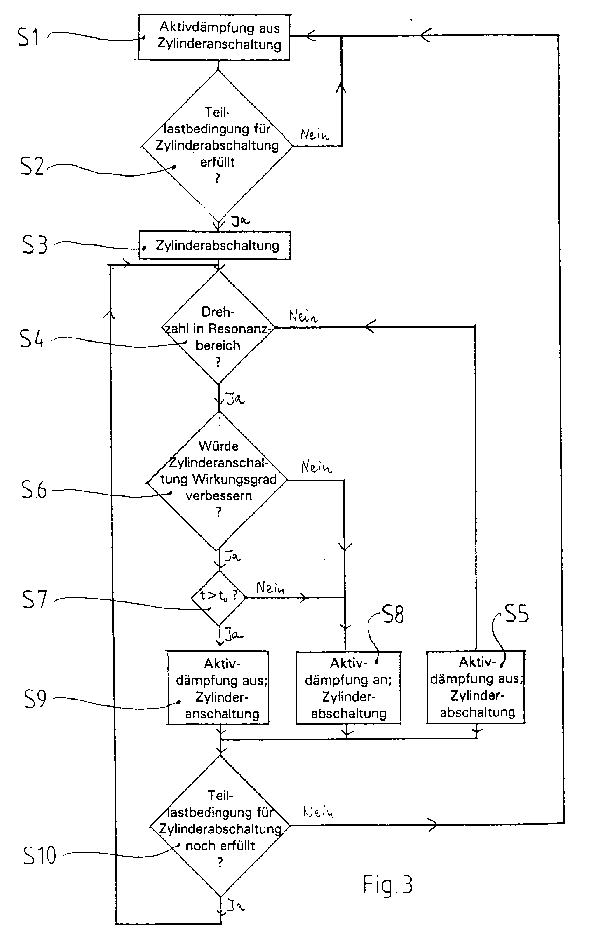

Das Flußdiagramm gemäß Figur 3 veranschaulicht die Betriebsweise des Fahrzeugantriebssystems. Angemerkt sei hier, daß Schritte, bei denen Zylinder oder die Aktivdämpfung an- oder ausgeschaltet werden, immer dann Leerschritte darstellen sollen, wenn sich die Zylinder bzw. die Aktivdämpfung bereits in dem entsprechenden Betriebszustand befindet. Im Schritt S1 wird der Verbrennungsmotor 1 in den Zylinderanschaltbetrieb gebracht. Im Schritt S2 wird geprüft, ob die Teillastbedingungen für eine Zylinderabschaltung erfüllt sind. Falls dies nicht der Fall ist, findet ein Rücksprung zum Schritt S1 statt; in anderen Worten wird der Zylinderanschaltbetrieb aufrechterhalten. Sofern die Teillastbedingungen jedoch erfüllt sind, wird im Schritt S3 der Zylinderabschaltbetrieb aktiviert. Im darauffolgenden Schritt S4 wird abgefragt, ob die Drehzahl des Verbrennungsmotors 1 im Bereich erhöhter Drehungleichförmigkeiten liegt, die eine Aktivdämpfung und ggf. eine Wiederanschaltung der Zylinder erfordern (ein solcher Bereich wird hier "Resonanzbereich" genannt). Ist dies nicht der Fall, so führt die elektrische Maschine 4 gemäß Schritt S5 keine Aktivdämpferfunktion aus. Befindet sich die Drehzahl jedoch in einem Resonanzbereich, so wird im Schritt S6 aus einem Kennfeld unter Berücksichtigung von momentaner Drehzahl und Motorlast ermittelt, ob durch eine Wiederanschaltung der Zylinder bei gleichzeitiger Beendigung der Aktivdämpferfunktion eine Erhöhung des Gesamtwirkungsgrads erzielt würde. Sofern dies bejaht wird, wird im Schritt S7 abgefragt, ob die Bedingung im Schritt S4 bereits länger als eine Umschaltzeit t_{U} erfüllt ist (der entsprechende Zeitzähler wird jeweils dann, wenn die Frage im Schritt S4 nach einem "Nein" erstmalig wieder mit einem "Ja" beantwortet wird, auf Null gesetzt und gestartet). Wird die Abfrage in Schritt S6 hingegen verneint oder ist die Zählerzeit t in Schritt S7 noch nicht größer als die Umschaltzeit t_{U}, so wird im Schritt S8 die Aktivdämpfung aktiviert. Ist hingegen im Schritt S8 die Umschaltzeit t_{U} überschritten, so werden im Schritt S9 die Zylinder angeschaltet und die Aktivdämpfung beendet. Im Schritt S10 wird abgefragt, ob die Teillastbedingung noch erfüllt ist. Sollte dies nicht der Fall sein, findet ein Rücksprung zu S1 statt, also ein Übergang in den Zylinderanschaltbetrieb. Ist die Teillastbedingung hingegen noch nicht erfüllt, findet ein Rücksprung zwischen die Schritte S3 und S4 statt. Zusammengefaßt findet also im Zylinderabschaltbetrieb kein Aktivdämpfung statt, wenn die Drehzahl nicht in einem Resonanzbereich liegt. Im Resonanzbereich findet hingegen Aktivdämpfung statt. Falls eine Wiederanschaltung der Zylinder zu einer Verbesserung des Gesamtwirkungsgrads führt und das Antriebssystem länger als die Umschaltzeit t_{U} in der Resonanz verbleibt, wird das System wieder in den Zylinderanschaltbetrieb gebracht.

## Patentansprüche

1. Fahrzeug-Antriebssystem mit
- einem Verbrennungsmotor (1) mit mehreren Zylindern,
- einer Einrichtung (12) zur Abschaltung eines Teils der Zylinder bei Teillast und
- einer elektrischen Maschine (4) zur aktiven Dämpfung von Drehungleichförmigkeiten des Verbrennungsmotors (1),
wobei der Verbrennungsmotor (1) ohne Drehungleichförmigkeitsdämfung im Zylinderabschaltbetrieb in einem oder mehreren Drehzahlbereichen wesentlich erhöhte Drehungleichförmigkeiten im Vergleich zu anderen Drehzahlbereichen zeigen würde,
dadurch gekennzeichnet, daß
das Antriebssystem so gesteuert ist, daß bei einem Betrieb mit Zylinderabschaltung in einem Drehzahlbereich mit erhöhten Drehungleichförmigkeiten zunächst die elektrische Maschine (4) als Aktivdämpfer wirkt und nach Ablauf einer Verzögerungszeit, sofern der Verbrennungsmotor (4) dann noch in dem besagten Drehzahlbereich läuft, eine Wiederanschaltung zumindest eines Teils der abgeschalteten Zylinder erfolgt.

2. Fahrzeug-Antriebssystem nach Anspruch 1, bei welchem die Steuerung des Antriebssystems die Wiederanschaltung der abgeschalteten Zylinder nur dann veranlaßt, wenn bei dem momentan vorliegenden Belastungszustand des Verbrennungsmotors der durch die Wiederanschaltung der Zylinder hervorgerufene Kraftstoffmehrverbrauch kleiner als der Kraftstoffmehrverbrauch aufgrund der Verlustleistung der elektrischen Maschine wegen der Aktivdämpfung ist.

3. Fahrzeug-Antriebssystem nach Anspruch 1 oder 2, bei welchem die elektrische Maschine (4) bei Zylkinderabschaltbetrieb außerhalb des Bereichs mit erhöhten Drehungleichförmigkeiten nicht oder nicht überall als Aktivdämpfer wirkt.

4. Fahrzeugantriebssystem nach einem der Ansprüche 1 bis 3, bei welchem die elektrische Maschine (4) bei Zylinderabschaltbetrieb auch außerhalb des Bereichs mit erhöhten Drehungleichförmigkeiten als Aktivdämpfer wirkt.

5. Fahrzeugantriebssystem nach einem der Ansprüche 1 bis 4, bei welchem die elektrische Maschine (4) außerdem die Funktion eines Starter-Generators hat und insbesondere als Kurbelwellen-Starter-Generator ausgebildet ist.

6. Fahrzeugsantriebssystem nach einem der Ansprüche 1 bis 5, bei welchem die elektrische Maschine (4) eine wechselrichtergespeiste Mehrphasen-Wechselstrommaschine ist.

7. Verfahren zum Betreiben eines Fahrzeug-Antriebssystems mit einem Verbrennungsmotor (1) mit mehreren Zylindern und einer elektrischen Maschine (4) zur aktiven Dämpfung von Drehungleichförmigkeiten des Verbrennungsmotors (1), wobei bei Teillast ein Teil des Zylinders abgeschaltet wird, wobei der Verbrennungsmotor (1) ohne Drehungleichförmigkeitsdämpfung im Zylinderabschaltbetrieb in einem oder mehreren Drehzahlbereichen wesentlich erhöhte Drehungleichförmigkeiten im Vergleich zu anderen Drehzahlbereichen zeigen würde,
dadurch gekennzeichnet, daß
das Antriebssystem so gesteuert wird, daß bei einem Betrieb mit Zylinderabschaltung in einem Drehzahlbereich mit erhöhten Drehungleichförmigkeiten zunächst die elektrische Maschine (4) als Aktivdämpfer wirkt und nach Ablauf einer Verzögerungszeit, sofern der Verbrennungsmotor (4) dann noch in dem besagten Drehzahlbereich läuft, eine Wiederanschaltung zumindest eines Teils der abgeschalteten Zylinder erfolgt.

8. Verfahren nach Anspruch 7, wobei die Wiederanschaltung der abgeschalteten Zylinder nur dann veranlaßt wird, wenn bei dem momentan vorliegenden Belastungszustand des Verbrennungsmotors der durch die Wiederanschaltung der Zylinder hervorgerufene Kraftstoff-mehrverbrauch kleiner als der Kraftstoffmehrverbrauch aufgrund der Verlustleistung der elektrischen Maschine wegen der Aktivdämpfung ist.

9. Verfahren nach Anspruch 7 oder 8, wobei die elektrische Maschine (4) bei Zylkinderabschaltbetrieb außerhalb des Bereichs mit erhöhten Drehungleichförmigkeiten nicht oder nicht überall als Aktivdämpfer wirkt.

10. Verfahren nach einem der Ansprüche 7 bis 9, wobei die elektrische Maschine (4) bei Zylinderabschaltbetrieb auch außerhalb des Bereichs mit erhöhten Drehungleichförmigkeiten als Aktivdämpfer wirkt.
